# EUROPEAN PATENT SPECIFICATION

(11) **EP 4 148 287 B1**
(45) Date of publication and mention of the grant of the patent: **04.12.2024**
(21) Application number: 22193076.1
(22) Date of filing: 31.08.2022
(51) Int. Cl.: F16B 13/06, F16B 13/08, F16B 19/10

(54) **BLIND FASTENERS AND ASSOCIATED METHODS FOR INSTALLING BLIND FASTENERS**
BLINDNIETE UND ZUGEHÖRIGE VERFAHREN ZUM INSTALLIEREN VON BLINDNIETEN
FIXATIONS EN AVEUGLE ET PROCÉDÉS ASSOCIÉS PERMETTANT D'INSTALLER DES FIXATIONS EN AVEUGLE

(30) Priority: 10.09.2021 US 202117471372
(43) Date of publication of application: 15.03.2023
(73) Proprietor: The Boeing Company, Arlington, VA 22202 (US)
(72) Inventor: MUNTZ, Nathan A., Chicago, 60606-1596 (US); SISCO, Tanni, Chicago, 60606-1596 (US)
(74) Representative: Howson, Richard Giles Bentham

(56) References cited:
- WO-A1-2020/077396
- DE-A1- 3 409 373
- DE-U1- 202016 103 068
- FR-A1- 2 210 464
- GB-A- 1 333 893
- GB-A- 642 770

## Description

### FIELD

This application relates to mechanical fasteners and, more particularly, to blind fasteners having tapered components.

### BACKGROUND

Mechanical fasteners (see e.g. FR 2 210 464 A) are widely used for joining two or more components of a structural assembly. For example, mechanical fasteners are extensively used for joining the structural components of the airframe of an aircraft.

Blind fastener systems are a particular type of mechanical fastener. Blind fastener systems include a core bolt and a sleeve, wherein both the core bolt and the sleeve are inserted into an appropriate bore in a structural assembly and engage the structural assembly from just one side of the structural assembly, without the need for accessing the opposite side of the structural assembly. Therefore, blind fastener systems are particularly suitable for use in applications where access to one side of a structural assembly is difficult or unavailable. Current tooling and installation methods for blind fastener systems are typically quite complex, difficult to manufacture, and challenging to integrate with robotics. These systems specifically struggle with installation at varying (non-normal) angles, installation where sealant is required (which may adhere to, and subsequently jam or plug the internal drive mechanism of the nose piece), and reducing cost.

Accordingly, those skilled in the art continue with research and development efforts in the field of blind fastener systems.

WO2020077396A1, in accordance with its abstract, states: a hydraulic tensioning and release tool for an expansion fastener of a type having an elongate member with a tapered portion for fastening a workpiece, said tool comprising: a sleeve for placement about the tapered portion; one or more cylinders including at least one cylinder for generating compressive force against the workpiece; a release piston for displacing the sleeve and a tension piston for coupling to an end of the elongate member, the tension piston and at least one of the one or more cylinders defining at least one tension chamber and the release piston and at least one of the one or more cylinders defining at least one release chamber; hydraulic ports in fluid communication with said tension chamber and said release chamber for application of hydraulic pressure thereto to displace the tension piston and the release piston for respectively tensioning the elongate member and for releasing the sleeve from the tapered portion; and a tension retaining arrangement for retaining the end of the elongate member in tension subsequent to removal of hydraulic pressure from the tensioning chamber.

DE202016103068U1, in accordance with a machine translation of its abstract, states: blind fastening device for fastening a component to a support wall, in particular a hollow profile, the blind fastening device comprising: - an expansion sleeve with expansion legs; - A sleeve head provided with an opening at one end of the expansion sleeve; - a screw with a threaded section which is guided through the sleeve head provided with the opening and the expansion sleeve, and with a screw head for tightening the screw; - An expanding nut with an internal thread and a conical section which, when the screw is tightened, engages in an opposite end of the expanding sleeve in order to move at least the opposite end of the expanding sleeve essentially radially to expand outwards and thus to anchor the expansion sleeve and - a design of the sleeve head which can be brought into engagement with a holding tool in order to prevent rotation of the sleeve head while the screw is tightened, characterized in that the expanding nut merges at a tapered end of its conical section into a hollow-cylindrical shoulder, the outer diameter of which is the same as the diameter of the opening of the sleeve head of the expanding sleeve is dimensioned with an interference fit, so that it can be pressed into the opening of the sleeve head by tightening the screw.

DE3409373A1, in accordance with its abstract, states: the invention relates to an anchoring element for anchoring building structures on concrete or solid-brick supporting walls, preferably light-metal substructures for facades. In the case of known anchoring elements, such as expanding dowels, it is aimed to provide a cost-effective anchoring element which can be positioned with simple means and the correct anchoring of which is instantly visible to the workman. For this purpose, an anchoring element, similar to a blind rivet, which has a sleeve and a tensioning pin and which can be anchored in a bore by means of a conventional riveting device, has been provided. The head of the tensioning pin spreads out the sleeve end for anchoring. A marking on the tensioning-pin shank indicates, by virtue of its location after the positioning, the location of the tensioning-pin head and thus the correctly performed or non-performed spreading-out of the sleeve. In the case of an advantageous further development, the predetermined breaking point or, after positioning, the break-off location of the tensioning pin is used as the marking.

GB1333893A, in accordance with its abstract, states an anchor bolt assembly comprises a bolt having a cylindrical shank at least a portion of which is screw-threaded, a reduced diameter portion, and a sleeve-expanding portion increasing in diameter from the diameter of the reduced diameter portion to the full shank diameter at 16, and a one-piece expansible sleeve about the bolt portion, the sleeve having a full-length longitudinal slit and an aperture diametrically opposite the slit and nearer to the sleeve end adjacent the shoulder of the bolt, a slit extending from the aperture to the sleeve and adjacent the expander portion of the bolt, and external ribs for engaging the wall of a bore in which the assembly is to be anchored so that the sleeve is held stationary when the bolt is pulled to cause the expander portion to expand the sleeve into wedging engagement with the bore walls. Preferably the bolt portion has a diameter equal to the root diameter of the thread. In its unexpanded form, the sleeve has an outside diameter equal to or slightly less than the full shank diameter, and has a length equal to the length of the bolt portion.

GB642770A, in accordance with its abstract, states: rivets, for use in blind holes, have a solid shank with a head coned to fit the 'bottom of the hole as left by the drill. A sleeve is driven by a hollow tool to force its end over the conical surface, and expand it into a chambered out part of the hole. The projecting end of the shank is then riveted over to secure an object, such as the plate, in place. The shank may be of aluminium and the sleeve of steel or both parts may be of aluminium alloys that for the sleeve being harder than that for the shank.

### SUMMARY

Disclosed are blind fasteners. The invention to which this European patent relates is defined in the appended claims.

In one example, the disclosed blind fastener includes a sleeve having a distal end portion and a proximal end portion and defining a bore. The blind fastener also includes a core bolt at least partially received in the bore of the sleeve, the core bolt defining a core bolt axis and including a body having a distal end portion and proximal end portion axially opposed from the distal end portion, wherein the body is tapered from the distal end portion of the body to the proximal end portion of the body such that the core bolt causes radial expansion of the sleeve when the body is urged relative to the sleeve through the bore along the core bolt axis.

In another example, the disclosed blind fastener includes a sleeve having a distal end portion and a proximal end portion, the sleeve defining a bore. The bore is tapered from the distal end portion to the proximal end portion. The sleeve includes a first metallic material. The blind fastener further includes a core bolt at least partially received in the bore of the sleeve, the core bolt including a second metallic material and defining a core bolt axis. The first metallic material is substantially softer than the second metallic material. The core bolt includes a body having a distal end portion and a proximal end portion axially opposed from the distal end portion. The body is tapered from the distal end portion of the body to the proximal end portion of the body. The blind fastener further includes a stem connected to the proximal end portion of the body.

Also disclosed are methods for installing a blind fastener into a bore in a structure. The blind fastener includes a sleeve and a core bolt at least partially received within the sleeve. The core bolt defines a bolt axis.

In one example, the disclosed method for installing a blind fastener into a bore includes inserting the blind fastener into the bore and pulling the core bolt relative to the sleeve to cause radial expansion of the sleeve.

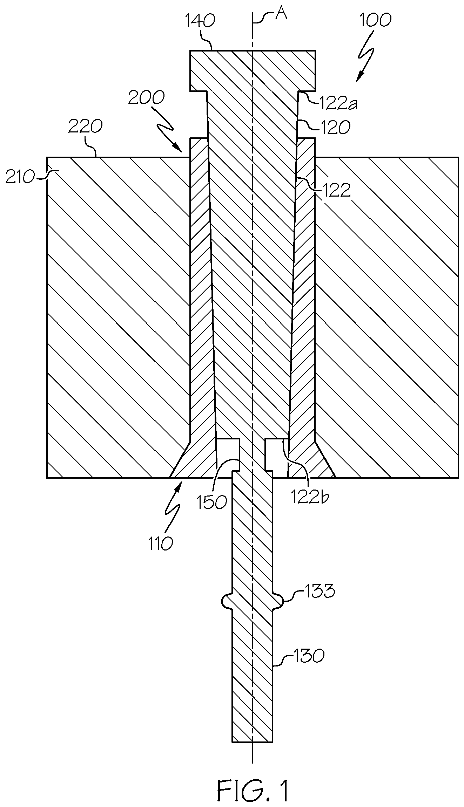

Other examples of the disclosed blind fasteners and associated methods for installing blind fasteners will become apparent from the following detailed description, the accompanying drawings, and the appended claims. The embodiments shown in figures 1 - 5 are for background purposes.

### BRIEF DESCRIPTION OF THE DRAWINGS

FIG. 1 is a side cross sectional view of a blind fastener in a structure;
FIG. 2 is a side cross sectional view of a sleeve of the blind fastener of FIG. 1;
FIG. 3 is a side cross sectional view of a core bolt of the blind fastener of FIG. 1;
FIG. 4 is a side cross sectional view of a blind fastener;
FIG. 5 is a side cross sectional view of a blind fastener;
FIG. 6 is a side cross sectional view of a blind fastener;
FIG. 7 is a side cross sectional view of a blind fastener during installation into a structure;
FIG. 8 is a side cross sectional view of a blind fastener installed in a structure;
FIG. 9 is a flow chart of a method for installing a blind fastener;
FIG. 10 is a flow diagram of an aircraft manufacturing and service methodology; and
FIG. 11 is a schematic illustration of an aircraft.

### DETAILED DESCRIPTION

The following detailed description refers to the accompanying drawings, which illustrate specific examples described by the present disclosure. Other examples having different structures and operations do not depart from the scope of the present disclosure. Like reference numerals may refer to the same feature, element, or component in the different drawings.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

For the purpose of this disclosure, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

References throughout the present specification to features, advantages, or similar language used herein do not imply that all of the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but do not necessarily, refer to the same example. Referring generally to FIGs. 1-8, disclosed is a blind fastener 100. The blind fastener 100 includes a sleeve 110 and a core bolt 120. The blind fastener 100 is configured to couple at least two components to form a structure 210 via radial expansion of the sleeve 110 upon movement of the core bolt 120 relative to the sleeve 110. The blind fastener 100 may be generally cylindrical in shape, although other shapes and configurations may be implemented.

Referring to FIG. 1, in one or more examples, the blind fastener 100 includes a core bolt 120 at least partially received in a bore 160 of the sleeve 110. The core bolt 120 defines a core bolt axis A_{C} and includes a body 122 having a distal end portion 122a and proximal end portion 122b axially opposed from the distal end portion 122a. In one example, the body 122 is tapered from the distal end portion 122a of the body 122 to the proximal end portion 122b of the body 122. The tapered shape of the body 122 causes radial expansion of the sleeve 110 when the body 122 is urged relative to the sleeve 110 through the bore 160 of the sleeve 110 along the core axis A_{C.}

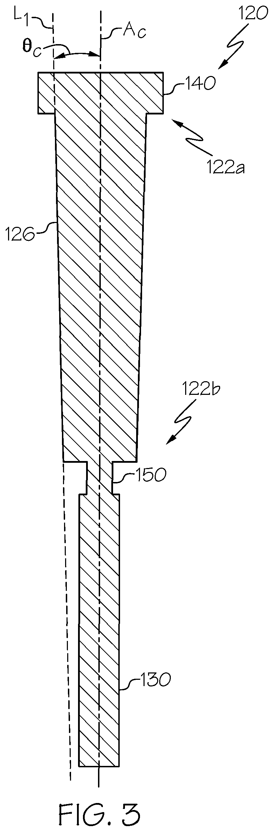

Referring to FIG. 1, the taper from the distal end portion 122a of the body 122 to the proximal end portion 122b of the body 122 is a continuous taper. Referring to FIG. 3, in one example, the continuous taper of the body 122 has a taper angle Oc defined as the angle between the core bolt axis A_{c} and a bolt plane defined in the drawings as a bolt line, L₁, coincident with an outside surface 126 of the body 122 of the core bolt 120. In one example, the angle Oc ranges from about 1 degree to about 20 degrees. In another example, the continuous taper has a taper angle Oc ranges from about 2 degrees to about 10 degrees.

In another example, the taper from the distal end portion 122a of the body 122 to the proximal end portion 122b of the body 122 is a discontinuous taper. For example, the taper from the distal end portion 122a of the body 122 to the proximal end portion 122b of the body 122 may vary such that it is increased at any portion along the body 122 to facilitate breaking near the neck 150 of the core bolt 120.

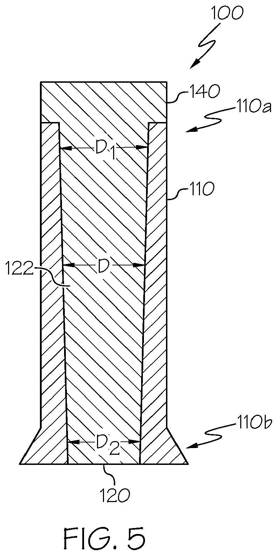

Referring to FIG. 5, in one or more examples, the body 122 of the core bolt 120 is a truncated conical body having a diameter D. The diameter D of the truncated conical body proximate the distal end portion 122a of the body 122, D₁, may be greater than the diameter of the truncated conical body proximate the proximal end portion 122b, D₂. Further, as illustrated in FIG. 5, the sleeve 110 may be countersunk such that it is chamfered to complement the received core bolt 120.

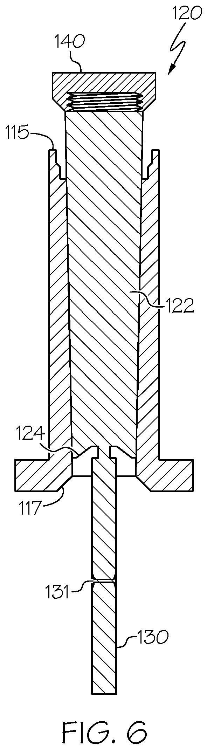

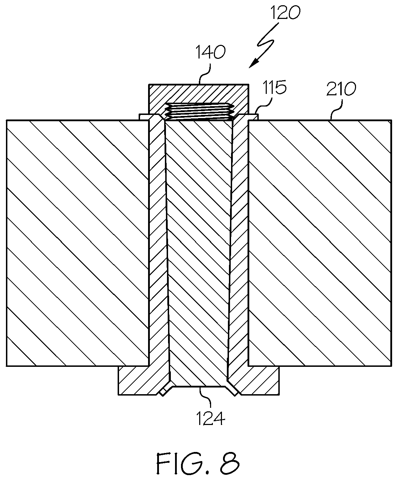

Referring to FIG. 6, in one or more examples, the body 122 of the core bolt 120 includes a flanged portion 124 at the proximal end portion 122b. The flanged portion 124 is configured to swage upon installation of the blind fastener 100 into a structure 210, see FIG. 8. The flanged portion 124 of the core bolt 120 may be formed by a flange forming tool 410. In one example, the flanged portion 124 of the core bolt 120 is formed by the flange forming tool 410 as the core bolt 120 is pulled up. In another example, the flange forming tool 410 may spin and/or turn and roll the flanged portion 124 of the core bolt 120 to maintain the core bolt 120 in a desired position.

The body 122 causes radial expansion of the sleeve 110 when the body 122 of the core bolt 120 moves along the core bolt axis A_{C} relative to the sleeve 110 and into the sleeve 110. The radial expansion of sleeve 110 facilitates maintaining the blind fastener 100 in a desired position within a structure 210.

Referring to FIG. 6, in one or more examples, the blind fastener 100 includes a stem 130. Stem 130 may be connected to the proximal end portion 122b of the body 122. In one example, the stem 130 includes at least one groove 131. Groove 131 may be annular, notched, or any other configuration for coupling with a tool. Referring to FIG. 1, in another example, the stem 130 includes a collared portion 133.

Referring to FIG. 1, in one or more examples, the blind fastener 100 includes a neck 150 abutting the proximal end portion 122b positioned between the body 122 and the stem 130. The neck 150 may be configured to break apart from the core bolt 120 upon being pulled along the core bolt axis A_{C} as the core bolt 120 moves, concurrently applying axial force to the sleeve 110, resulting in radial expansion. In one example, the neck 150 is substantially cylindrical and has a diameter that is smaller than a diameter proximate the proximal end portion 122b of the core bolt 120, D₂.

Referring to FIG. 1, in one or more examples, the blind fastener 100 may include a cap 140. In one example, the cap 140 is integral with the core bolt 120. In another example, the cap 140 is threadedly engageable with the core bolt 120, see FIGs. 6-8. The cap 140 may be substantially flush with an inner surface 220 of the structure 210 upon installation. In another example, the cap 140 may be offset from the inner surface 220 of the structure 210 upon installation. The sleeve 110 buckles along a flanged portion 115 and forms a lip along the inner surface 220 between the cap 140 and the structure 210, see FIG. 8.

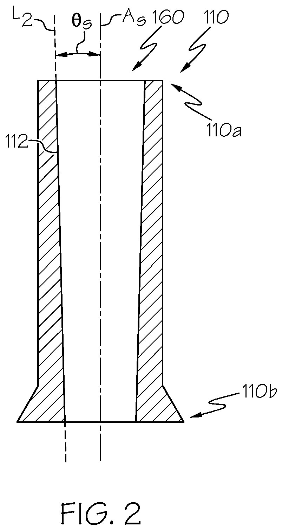

Referring to FIG. 2, in one or more example, sleeve 110 has a distal end portion 110a and a proximal end portion 110b. Sleeve 110 further defines a bore 160 configured to receive core bolt 120. In one example, sleeve 110 defines a sleeve axis As. The bore 160 of the sleeve 110 is tapered from the distal end portion 110a to the proximal end portion 110b of the sleeve 110. The taper may be continuous from the distal end portion 110a to the proximal end portion 1 10b. The continuous taper of the sleeve 110 may be substantially the same as the continuous taper of the core bolt 120.

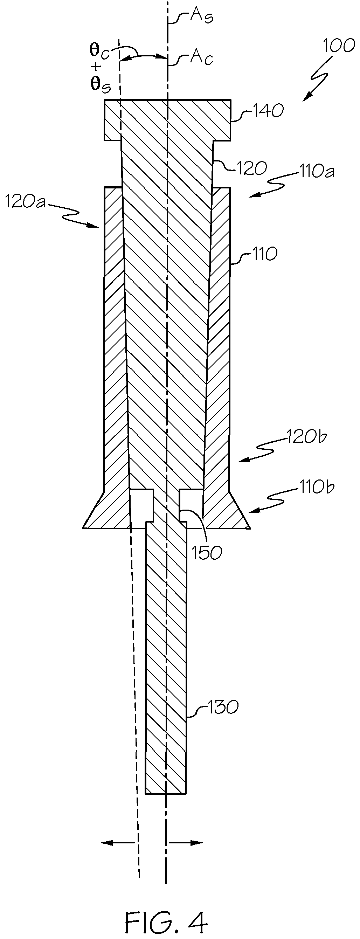

Still referring to FIG. 2, in one or more examples, the continuous taper of the sleeve 110 has a sleeve taper angle Θ_{S} that is defined by the angle between a sleeve axis A_{S} and a sleeve plane defined in the drawings as a sleeve line, L₂, coincident with an inside surface 112 of the sleeve 110. In one example, the continuous taper has a sleeve taper angle Os ranging from about 1 degree to about 20 degrees. In another example, the continuous taper has a sleeve taper angle Os ranging from about 2 degrees to about 10 degrees. In yet another example, referring to FIG. 4, the continuous taper has a sleeve taper angle Os that is substantially the same as a taper angle Oc of the core bolt 120.

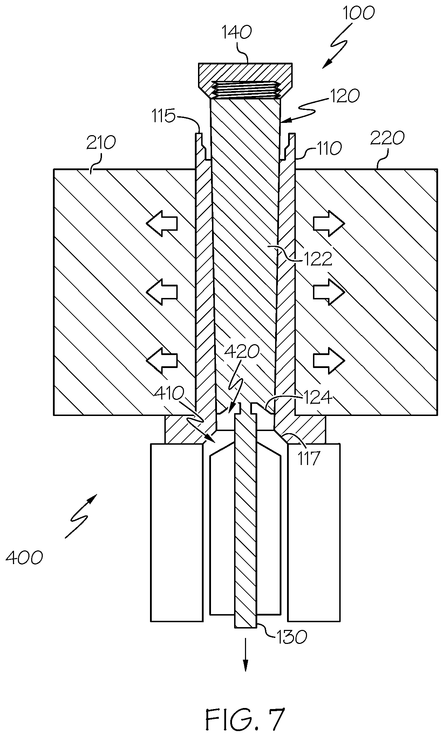

Referring to FIG. 6 and FIG. 7, the sleeve 110 includes a flanged portion 115 at the distal end portion 110a. The flanged portion 115 may be sized and shaped to receive the distal end portion 122a of the body 122 of the core bolt 120 and the cap 140 of the blind fastener 100. For example, the cap 140 may be similarly chamfered to mate with the flanged portion 115 of the sleeve 110. The flanged portion 115 of the sleeve 110 may swage over the inner surface 220 of the structure 210 upon pulling of the core bolt 120 along the core bolt axis A_{C} for retention of the blind fastener 100 upon installation, see FIG. 8.

Referring to FIG.6-FIG. 8, in one or more examples, the sleeve 110 may have a lower flanged portion 117. In one example, the lower flanged portion 117 is chamfered. The lower flanged portion 117 may be sized and shaped to accommodate a flanged portion 124 of the core bolt 120 upon installation of the blind fastener 100. Similarly, the sleeve 110 may be a protruding head sleeve, see FIG. 8.

In one non-limiting example, the blind fastener 100 includes a sleeve 110 having a distal end portion 110a and a proximal end portion 110b. The sleeve 110 defines a bore 160. The bore 160 is tapered from the distal end portion 110a to the proximal end portion 110b. The sleeve 110 includes a first metallic material.

The blind fastener 100 further includes a core bolt 120 at least partially received in the bore 160 of the sleeve 110. The core bolt 120 includes a second metallic material and defines a core bolt axis A_{C}. The first metallic material has a hardness that is substantially softer than the hardness of the second metallic material. The core bolt 120 includes a body 122 having a distal end portion 122a and a proximal end portion 122b axially opposed from the distal end portion 122a. The body 122 is tapered from the distal end portion 122a of the body 122 to the proximal end portion 122b of the body 122. The blind fastener 100 further includes a stem 130 connected to the proximal end portion 122b of the body 122.

In one or more examples, the core bolt 120 of blind fastener 100 includes a second metallic material and the sleeve 110 includes a first metallic material. In one example, the first metallic material is substantially different from the second metallic material. The first metallic material may have a hardness that is different than a hardness of the second metallic material. The first metallic material may be at least 5% softer than the second metallic material. In another example, the first metallic material may be at least 10% softer than the second metallic material. The materials of the core bolt 120 and sleeve 110 of the fastener 100 may be selected based upon one or more desired material properties, such as hardness, tensile strength, elongation, yield strength, and the like. Material hardness, for example, may be measured by Brinell, Rockwell, Vickers, or any other suitable means of determining material hardness. Material hardness may change based upon the material composition used for each component of the blind fastener 100.

In one example, the first metallic material includes a ferrous metal. In another example, the first metallic material includes a non-ferrous metal. In yet another example, the first metallic material may include one or more of titanium, aluminum, copper, bronze, beryllium, nickel, tin, steel, or any combination thereof. In one example, the first metallic material is corrosion resistant. In another example, the first metallic material provides electromagnetic energy (EME) protection. In one non-limiting example, the blind fastener 100 includes Inconel^{™}. The use of non-metallic materials is also contemplated and such use will not result in a departure from the scope of the present disclosure.

In one example, the second metallic material includes a ferrous metal. In another example, the second metallic material includes a non-ferrous metal. In yet another example, the second metallic material may include one or more of titanium, aluminum, copper, bronze, beryllium, nickel, tin, steel, or any combination thereof. In one example, the second metallic material is corrosion resistant. In another example, the second metallic material provides EME protection. In one non-limiting example, the second metallic material includes Inconel^{™}. The use of non-metallic materials is also contemplated and such use will not result in a departure from the scope of the present disclosure.

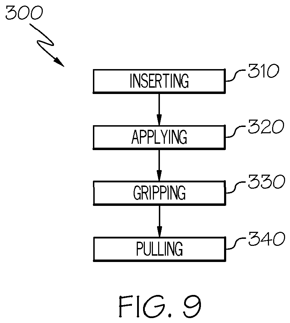

Referring to FIG. 9, in one or more examples, disclosed is a method 300 for installing a blind fastener 100, as shown and described herein, into a bore 200 in a structure 210. The blind fastener 100 includes a sleeve 110 and a core bolt 120 at least partially received within the sleeve 110, the core bolt 120 defining a core bolt axis A_{C}, see FIG. 1.

Referring to FIG. 9, the method 300 includes inserting 310 the blind fastener 100 into the bore 200 of the structure 210. In one example, the inserting 310 includes inserting both the sleeve 110 and core bolt 120 simultaneously into the bore 200 of the structure 210. The inserting 310 engages the structure 210 from just one side, without the need for accessing the opposing side of the structure 210. The inserting 310 may be performed manually, may be automated, or a combination thereof.

Still referring to FIG. 9, the method 300 includes applying 320 an axial force to the sleeve 110 to immobilize the sleeve relative to the structure 210. In one example, the method 300 incudes, during the applying 320, pulling 340 the core bolt 120 relative to the sleeve 110 to cause radial expansion of the sleeve 110. The pulling 340 may be performed manually, may be automated, or a combination thereof.

The pulling 340 may be achieved, for example, by operatively coupling a tool 400 to the core bolt 120, the tool 400 configured to pull the core bolt 120 along the core bolt axis A_{C}. The tool 400 may include any movement mechanism, such as an actuator, configured to pull the core bolt 120 along the core bolt axis A_{C}. Applying 320 axial force occurs simultaneously with the pulling 340 as the tapered core bolt 120 moves along the core bolt axis A_{C} and presses against the sleeve 110 into structure 210.

In one example, the core bolt 120 includes a stem 130 and the method 300 includes gripping 330 the core bolt 120 prior to the pulling 340. The gripping 330 may be performed manually, may be automated, or a combination thereof. The gripping 330 may include moving a tool 400 into engagement with the stem 130 of the blind fastener 100. In one example, the tool 400 includes a locking collar 420 configured to engage with the stem 130 of the blind fastener 100. The stem 130 may include a groove 131, a collared portion 133, or any other feature to facilitate engagement of the tool 400, or locking collar 420, with the blind fastener 100. The locking collar 420 may be operatively coupled with a movement mechanism of the tool 400, such as an actuator, configured to pull the locking collar 420 along the core bolt axis A_{C}.

The core bolt 120 of the blind fastener 100 includes a cap 140. The cap 140 protruded from the structure 210 after the pulling 340, see FIG. 8. The cap 140 abuts the buckled portion of the sleeve 110 along the inner surface 220 of the structure 210 after the pulling 340, upon installation. In yet another example, the cap 140 is substantially flush with an inner surface 220 of the structure 210 after the pulling 340, see FIG. 5.

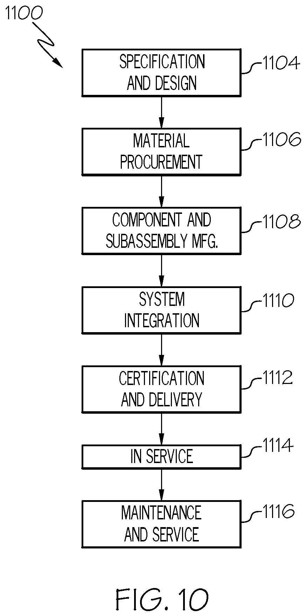

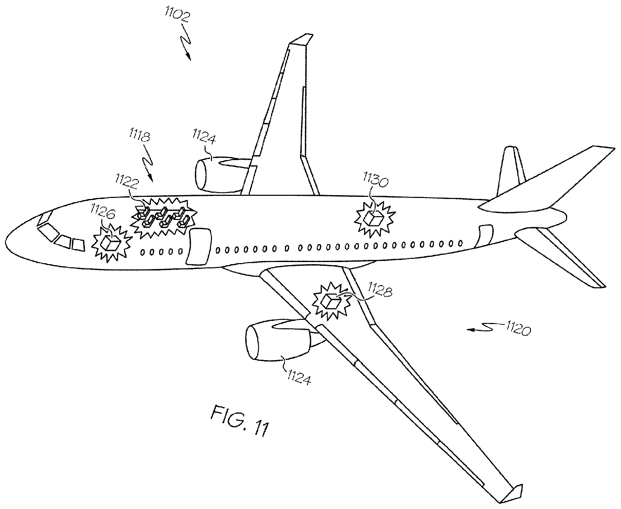

Examples of the subject matter disclosed herein may be described in the context of aircraft manufacturing and service method 1100 as shown in FIG. 10 and aircraft 1102 as shown in FIG. 11. During pre-production, the method 1100 may include specification and design (block 1104) of aircraft 1102 and material procurement (block 1106). During production, component and subassembly manufacturing (block 1108) and system integration (block 1110) of aircraft 1102 may take place. Thereafter, aircraft 1102 may go through certification and delivery (block 1112) to be placed in service (block 1114). While in service, aircraft 1102 may be scheduled for routine maintenance and service (block 1116). Routine maintenance and service may include modification, reconfiguration, refurbishment, etc. of one or more systems of aircraft 1102.

Each of the processes of the method 1100 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

As shown in FIG. 11, aircraft 1102 produced by the method 1100 may include airframe 1118 with a plurality of high-level systems 1120 and interior 1122. Examples of high-level systems 1120 include one or more of propulsion system 1124, electrical system 1126, hydraulic system 1128, and environmental system 1130. Any number of other systems may be included. Although an aerospace example is shown, the principles disclosed herein may be applied to other industries, such as the automotive industry. Accordingly, in addition to aircraft 1102, the principles disclosed herein may apply to other vehicles, e.g., land vehicles, marine vehicles, space vehicles, etc.

The disclosed blind fasteners and associated methods for installing blind fasteners shown or described herein may be employed during any one or more of the stages of the method 1100. For example, components or subassemblies corresponding to component and subassembly manufacturing (block 1108) may be fabricated or manufactured in a manner similar to components or subassemblies produced while aircraft 1102 is in service (block 1114).

Also, one or more examples of the systems, methods, or combination thereof may be utilized during production stages (block 1108 and block 1110), for example, by substantially expediting assembly of or reducing the cost of aircraft 1102. Similarly, one or more examples of the systems or method realizations, or a combination thereof, may be utilized, for example and without limitation, while aircraft 1102 is in service (block 1114) and/or during maintenance and service (block 1116).

The disclosed blind fasteners and associated methods for installing blind fasteners are described in the context of an aircraft. However, one of ordinary skill in the art will readily recognize that the disclosed blind fasteners and associated methods for installing blind fasteners may be utilized for a variety of applications. For example, the disclosed blind fasteners and associated methods for installing blind fasteners may be implemented in various types of vehicles including, e.g., helicopters, watercraft, passenger ships, automobiles, and the like.

Although various examples of the disclosed blind fasteners and associated methods for installing blind fasteners have been shown and described, modifications may occur to those skilled in the art upon reading the specification. The present application includes such modifications and is limited only by the scope of the claims.

## Claims

1. A blind fastener (100) comprising:
a sleeve (110) comprising a distal end portion (110a), a proximal end portion (110b), and a flanged portion (115) at the distal end portion (1 10a), wherein the sleeve defines a bore (160); and
a core bolt (120) at least partially received in the bore (160) of the sleeve (110), the core bolt (120) defining a core bolt axis (A_{C}) and comprising a body (122) and a cap (140), wherein the body has a distal end portion (122a) and a proximal end portion (122b) axially opposed from the distal end portion (122a), wherein the body (122) is tapered from the distal end portion (122a) of the body (122) to the proximal end portion (122b) of the body (122) such that the core bolt (120) causes radial expansion of the sleeve (110) when the body (122) is urged relative to the sleeve (110) through the bore (160) along the core bolt axis (Ac);
wherein the cap (140) and flanged portion (115) are arranged such that the sleeve (110) buckles along the flanged portion (115) to form a lip which abuts the cap when the body (122) is urged relative to the sleeve (110) through the bore (160) along the core bolt axis (Ac).

2. The blind fastener (100) of Claim 1, wherein the taper from the distal end portion (122a) of the body (122) to the proximal end portion (122b) of the body (122) is a continuous taper.

3. The blind fastener (100) of Claim 2, wherein the continuous taper has a taper angle (Oc) ranging from about 1 degree to about 20 degrees, for example ranging from about 2 degrees to about 10 degrees.

4. The blind fastener (100) of any preceding Claim , wherein the body (122) is a truncated conical body, and
wherein a diameter of the truncated conical body proximate the distal end portion (122a) of the body (122) is optionally greater than the diameter of the truncated conical body proximate the proximal end portion (122b).

5. The blind fastener (100) of any preceding Claim, wherein the body (122) of the core bolt (120) comprises a flanged portion (124) at the proximal end portion (122b).

6. The blind fastener (100) of any preceding Claim, further comprising a stem (130) connected to the proximal end portion (122b) of the body (122).

7. The blind fastener (100) of any preceding Claim, wherein the stem (130) comprises at least one groove (131).

8. The blind fastener (100) of any preceding Claim, wherein the stem (130) comprises a collared portion (133).

9. The blind fastener (100) of any preceding Claim, further comprising a neck (150) abutting the proximal end portion (122b) positioned between the body (122) and the stem (130).

10. The blind fastener (100) of any preceding Claim, wherein the core bolt (120) comprises a second metallic material and the sleeve (110) comprises a first metallic material, and wherein the first metallic material is substantially different from the second metallic material; wherein the first metallic material is optionally at least 5% softer than the second metallic material.

11. The blind fastener (100) of any preceding Claim, wherein the bore (160) is tapered from the distal end portion (110a) to the proximal end portion (110b);
wherein the taper is continuous; and/or
wherein the taper has a sleeve taper angle (Os) ranging from about 1 degree to about 20 degrees; and/or
wherein the taper has a sleeve taper angle (Os) ranging from about 2 degree to about 10 degrees; and/or
wherein the taper has a sleeve taper angle (Os) that is substantially the same as a taper angle (Oc) of the core bolt (120).

12. The blind fastener of any preceding Claim, wherein the cap (140) is integral with the core bolt (120).

13. The blind fastener according to any of Claims 1 to 11, wherein the cap (140) is threadedly engageable with the core bolt (120).

14. A method (300) for installing a blind fastener (100) according to Claim 1 into a bore (200) in a structure (210), the method (300) comprising:
inserting (310) the blind fastener (100) into the bore (200); and
pulling (340) the core bolt (120) relative to the sleeve (110) to cause radial expansion of the sleeve (110).

15. The method (300) of Claim 14, further comprising, during the pulling (340), applying (320) an axial force to the sleeve (110) to immobilize the sleeve relative to the structure (210).

## Patentansprüche

1. Blindniet (100), der Folgendes umfasst:
eine Hülse (110), die einen distalen Endabschnitt (110a), einen proximalen Endabschnitt (110b) und einen Flanschabschnitt (115) am distalen Endabschnitt (110a) umfasst, wobei die Hülse eine Bohrung (160) definiert; und
eine Kernschraube (120), die zumindest teilweise in der Bohrung (160) der Hülse (110) aufgenommen ist, wobei die Kernschraube (120) eine Kernschraubenachse (A_{c}) definiert und einen Körper (122) und eine Kappe (140) umfasst, wobei der Körper einen distalen Endabschnitt (122a) und einen proximalen Endabschnitt (122b) aufweist, der dem distalen Endabschnitt (122a) axial gegenüberliegt, wobei sich der Körper (122) vom distalen Endabschnitt (122a) des Körpers (122) zum proximalen Endabschnitt (122b) des Körpers (122) verjüngt, sodass die Kernschraube (120) eine radiale Ausdehnung der Hülse (110) bewirkt, wenn der Körper (122) relativ zur Hülse (110) entlang der Kernschraubenachse (A_{c}) durch die Bohrung (160) getrieben wird;
wobei die Kappe (140) und der Flanschabschnitt (115) so angeordnet sind, dass sich die Hülse (110) entlang des Flanschabschnitts (115) aufwölbt, um eine Lippe zu bilden, die an der Kappe anliegt, wenn der Körper (122) relativ zur Hülse (110) entlang der Kernschraubenachse (A_{c}) durch die Bohrung (160) getrieben wird.

2. Blindniet (100) nach Anspruch 1, wobei die Verjüngung vom distalen Endabschnitt (122a) des Körpers (122) zum proximalen Endabschnitt (122b) des Körpers (122) eine kontinuierliche Verjüngung ist.

3. Blindniet (100) nach Anspruch 2, wobei die kontinuierliche Verjüngung einen Kegelwinkel (Θ_{c}) aufweist, der von etwa 1 Grad bis etwa 20 Grad reicht, beispielsweise von etwa 2 Grad bis etwa 10 Grad.

4. Blindniet (100) nach einem der vorhergehenden Ansprüche, wobei der Körper (122) ein abgeschnittener konischer Körper ist, und
wobei ein Durchmesser des abgeschnittenen konischen Körpers in der Nähe des distalen Endabschnitts (122a) des Körpers (122) gegebenenfalls größer ist als der Durchmesser des abgeschnittenen konischen Körpers in der Nähe des proximalen Endabschnitts (122b).

5. Blindniet (100) nach einem der vorhergehenden Ansprüche, wobei der Körper (122) der Kernschraube (120) einen Flanschabschnitt (124) am proximalen Endabschnitt (122b) umfasst.

6. Blindniet (100) nach einem der vorhergehenden Ansprüche, ferner umfassend einen Schaft (130), der mit dem proximalen Endabschnitt (122b) des Körpers (122) verbunden ist.

7. Blindniet (100) nach einem der vorhergehenden Ansprüche, wobei der Schaft (130) mindestens eine Nut (131) umfasst.

8. Blindniet (100) nach einem der vorhergehenden Ansprüche, wobei der Schaft (130) einen Kragenabschnitt (133) umfasst.

9. Blindniet (100) nach einem der vorhergehenden Ansprüche, ferner umfassend einen Hals (150), der am proximalen Endabschnitt (122b) anliegt, der zwischen dem Körper (122) und dem Schaft (130) positioniert ist.

10. Blindniet (100) nach einem der vorhergehenden Ansprüche, wobei die Kernschraube (120) ein zweites metallisches Material umfasst und die Hülse (110) ein erstes metallisches Material umfasst und wobei sich das erste metallische Material wesentlich von dem zweiten metallischen Material unterscheidet; wobei das erste metallische Material optional mindestens 5 % weicher als das zweite metallische Material ist.

11. Blindniet (100) nach einem der vorhergehenden Ansprüche, wobei sich die Bohrung (160) vom distalen Endabschnitt (110a) zum proximalen Endabschnitt (110b) verjüngt;
wobei die Verjüngung kontinuierlich ist; und/oder
wobei die Verjüngung einen Hülsenkegelwinkel (Os) von etwa 1 Grad bis etwa 20 Grad aufweist; und/oder
wobei die Verjüngung einen Hülsenkegelwinkel (Os) von etwa 2 Grad bis etwa 10 Grad aufweist; und/oder
wobei die Verjüngung einen Hülsenkegelwinkel (Os) aufweist, der im Wesentlichen dem Kegelwinkel (Θ_{c}) der Kernschraube (120) entspricht.

12. Blindniet nach einem der vorhergehenden Ansprüche, wobei die Kappe (140) integral mit der Kernschraube (120) ist.

13. Blindniet nach einem der Ansprüche 1 bis 11, wobei die Kappe (140) mit der Kernschraube (120) in Gewindeeingriff bringbar ist.

14. Verfahren (300) zum Einbau eines Blindniets (100) nach Anspruch 1 in eine Bohrung (200) in einer Struktur (210), wobei das Verfahren (300) Folgendes umfasst:
Einsetzen (310) des Blindniets (100) in die Bohrung (200); und
Ziehen (340) der Kernschraube (120) in Bezug auf die Hülse (110), um eine radiale Ausdehnung der Hülse (110) zu bewirken.

15. Verfahren (300) nach Anspruch 14, das ferner, während des Ziehens (340), das Aufbringen (320) einer axialen Kraft auf die Hülse (110) umfasst, um die Hülse relativ zur Struktur (210) zu fixieren.

## Revendications

1. Fixation en aveugle (100) comprenant :
un manchon (110) comprenant une partie d'extrémité distale (110a), une partie d'extrémité proximale (110b) et une partie à bride (115) au niveau de la partie d'extrémité distale (110a), le manchon définissant un alésage (160) ; et
un boulon central (120) au moins partiellement reçu dans l'alésage (160) du manchon (110), le boulon central (120) définissant un axe de boulon central (A_{c}) et comprenant un corps (122) et un capuchon (140), le corps ayant une partie d'extrémité distale (122a) et une partie d'extrémité proximale (122b) axialement opposée à la partie d'extrémité distale (122a), le corps (122) étant conique de la partie d'extrémité distale (122a) du corps (122) à la partie d'extrémité proximale (122b) du corps (122) de sorte que le boulon central (120) provoque une expansion radiale du manchon (110) lorsque le corps (122) est poussé par rapport au manchon (110) à travers l'alésage (160) le long de l'axe de boulon central (A_{c}) ;
le capuchon (140) et la partie à bride (115) étant disposés de sorte que le manchon (110) se déforme le long de la partie à bride (115) pour former une lèvre qui vient en butée contre le capuchon lorsque le corps (122) est poussé par rapport au manchon (110) à travers l'alésage (160) le long de l'axe de boulon central (A_{c}).

2. Fixation en aveugle (100) selon la revendication 1, le cône de la partie d'extrémité distale (122a) du corps (122) à la partie d'extrémité proximale (122b) du corps (122) étant un cône continu.

3. Fixation en aveugle (100) selon la revendication 2, le cône continu présentant un angle de conicité (Θ_{c}) allant d'environ 1 degré à environ 20 degrés, par exemple allant d'environ 2 degrés à environ 10 degrés.

4. Fixation en aveugle (100) selon l'une quelconque des revendications précédentes, le corps (122) étant un corps tronconique, et
un diamètre du corps tronconique à proximité de la partie d'extrémité distale (122a) du corps (122) étant éventuellement supérieur au diamètre du corps tronconique à proximité de la partie d'extrémité proximale (122b).

5. Fixation en aveugle (100) selon l'une quelconque des revendications précédentes, le corps (122) du boulon central (120) comprenant une partie à bride (124) au niveau de la partie d'extrémité proximale (122b).

6. Fixation en aveugle (100) selon l'une quelconque des revendications précédentes, comprenant en outre une tige (130) reliée à la partie d'extrémité proximale (122b) du corps (122).

7. Fixation en aveugle (100) selon l'une quelconque des revendications précédentes, la tige (130) comprenant au moins une rainure (131).

8. Fixation en aveugle (100) selon l'une quelconque des revendications précédentes, la tige (130) comprenant une partie à collet (133).

9. Fixation en aveugle (100) selon l'une quelconque des revendications précédentes, comprenant en outre un col (150) venant en butée contre la partie d'extrémité proximale (122b) positionnée entre le corps (122) et la tige (130).

10. Fixation en aveugle (100) selon l'une quelconque des revendications précédentes, le boulon central (120) comprenant un second matériau métallique et le manchon (110) comprenant un premier matériau métallique, et le premier matériau métallique étant sensiblement différent du second matériau métallique ; le premier matériau métallique étant éventuellement au moins 5 % plus souple que le second matériau métallique.

11. Fixation en aveugle (100) selon l'une quelconque des revendications précédentes, l'alésage (160) étant conique de la partie d'extrémité distale (110a) à la partie d'extrémité proximale (110b) ;
le cône étant continu ; et/ou
le cône présentant un angle de conicité de manchon (8s) allant d'environ 1 degré à environ 20 degrés ; et/ou
le cône présentant un angle de conicité de manchon (8s) allant d'environ 2 degrés à environ 10 degrés ; et/ou
le cône présentant un angle de conicité de manchon (8s) qui est sensiblement le même qu'un angle de conicité (Θ_{c}) du boulon central (120).

12. Fixation en aveugle selon l'une quelconque des revendications précédentes, le capuchon (140) faisant partie intégrante du boulon central (120).

13. Fixation en aveugle selon l'une quelconque des revendications 1 à 11, le capuchon (140) étant en prise filetée avec le boulon central (120).

14. Procédé (300) d'installation d'une fixation en aveugle (100) selon la revendication 1 dans un alésage (200) d'une structure (210), le procédé (300) comprenant :
l'insertion (310) de la fixation en aveugle (100) dans l'alésage (200) ; et
la traction (340) du boulon central (120) par rapport au manchon (110) pour provoquer une expansion radiale du manchon (110).

15. Procédé (300) selon la revendication 14, comprenant en outre, pendant la traction (340), l'application (320) d'une force axiale au manchon (110) pour immobiliser le manchon par rapport à la structure (210).
